# EUROPEAN PATENT SPECIFICATION

(11) **EP 1 231 288 B1**
(45) Date of publication and mention of the grant of the patent: **14.04.2010**
(21) Application number: 00970011.3
(22) Date of filing: 23.10.2000
(51) Int. Cl.: C22C 26/00

(54) **COMPOSITE MATERIAL CONTAINING ULTRA-HARD PARTICLE**
KOMPOSITMATERIAL MIT ULTRAHARTEN PARTIKELN
MATIERE COMPOSITE CONTENANT DES PARTICULES ULTRA-DURES

(30) Priority: 29.10.1999 JP 30896399
(43) Date of publication of application: 14.08.2002
(73) Proprietor: Sumitomo Electric Industries, Ltd., Osaka-shi, Osaka 541-0041 (JP)
(72) Inventor: MORIGUTI,Hideki; Itami Works Sumitomo Ele.Ind.Ltd., Itami-shi, Hyogo 664-0016 (JP); TSUDUKI,Katsunori Itami Works Sumitomo Ele.Ind.Ltd, Itami-shi, Hyogo 664-0016 (JP); IKEGAYA, Akihiko Itami Works Sumitomo Ele.Ind.Ltd., Itami-shi, Hyogo 664-0016 (JP)
(74) Representative: Cross, Rupert Edward Blount
(86) International application number: PCT/JP2000/007403
(87) International publication number: WO 2001/032947

(56) References cited:
- EP-A2- 0 774 527
- JP-A- 5 024 922
- JP-A- 8 109 431
- JP-A- 8 176 696
- JP-A- 10 310 840
- US-A- 5 585 175

## Description

### Technical Field

The present invention relates to a composite material obtained by compounding ultra-hard particles such as a diamond and cubic boron nitride with a hard material, more specifically, a composite material most suitable as a material for cutting and drilling tools with wear resistance.

### Background Art

The fields of application of diamond sintered bodies have increased due to their excellent wear resistance and heat conductivity. However, since the conventional diamond sintered body is manufactured in an extreme pressure generating container, the manufacturing cost is high and there are many limitations in terms of its formation. Therefore, in Japanese Unexamined Patent Publication Number (No.) H5-24922, it is proposed that a diamond-containing composite material is sintered at a pressure and temperature that are not thermodynamically stable, whereby a diamond-containing high density composite sintered body composed of a binding material with a density of 85% or more is manufactured without using an ultrahigh pressure container. However, the merits of such composite body have been used for only limited purposes because the strength and toughness of the body are inferior compared with a cemented carbide body.

On the other hand, Japanese Unexamined Patent Publications Nos. H5-239585 and H9-194978 disclose composite materials that are formed from cemented carbide and diamond particles by sintering without using an ultrahigh pressure apparatus such that the wear resistance, strength, and toughness thereof are made compatible with each other.

However, the composite materials manufactured by these techniques are insufficient in terms of the optimization of the coating film thickness, diamond particle content, and the dispersion condition of diamond particles, so that the strength and toughness of the material is inferior to that of cemented carbide, and the excellent performance of the materials is exhibited for only limited purposes of use in addition, when these composite materials are used for a wear resistance or cutting tool, the diamond may easily fall off.

Therefore, the main object of the invention is to provide a composite material having excellent wear resistance in which ultra-hard particles such as diamond will not fall off easily.

US 5585175 describes a wear resistant material consisting of diamond in a matrix containing a hard constituent and surrounded by a layer of refractory metals, carbides, nitrides, oxides, borides or silicides. EP 0774527 describes a sintered body holding diamond grains in a matrix of cemented carbide or cermet in a dispersed state. JP 10-310840 describes a composite member containing a hard phase and a bonding phase metal, wherein the hard phase contains coated diamond particles. JP 08-109431 describes a diamond sintered compact containing a hard alloy as a binding material for sintering. JP 08-176696 describes a diamond dispersed ceramic composite sintered compact.

### Disclosure of the invention

The present invention provides an ultra-hard particles-containing composite material comprising ultra-hard particles and a hard material, wherein the ultra-hard particles are diamond and / or cubic boron nitride, the content of the ultra-hard particles in the composite material is not less than 10 volume percent and not more than 30 volume percent, the ultra-hard particles are dispersed in the composite material such that the Vickers hardness of the composite material is within a range of +/-15% to that of the hard material, wherein the Vickers hardness is measured by (i) a method in which powder having the same composition as that of the hard material in the composite material is sintered under the same sintering conditions as the composite material, and the hardness of the sintered body thus obtained is measured, or (ii) the microhardness is measured with a Knoop or dynamic hardness gauge in a plurality of regions that do not contain the ultra-hard particles in the composite material, and the hardness value is converted into the Vickers hardness, whereby the Vickers hardness of the composite material that does not contain ultra-hard particles is obtained, wherein the microhardness is measured in a region that does not contain ultra-hard particles at a depth of 3 times or less of the depth of indentation.

The present achieves the abovementioned object by specifying the contents and dispersion condition of ultra-hard particles in the composite material.

Herein, diamond and/or cubic boron nitride is used as ultra-hard particles. If all of the ultra-hard particles are diamond, a composite material that is excellent in wear resistance is obtained. To the contrary, if all of the ultra-hard particles are cubic boron nitride, workability of the composite material is remarkably improved, and when this composite material is used for a cutting cool with wear resistance, the tool can be manufactured with high accuracy at a low cost.

The content of the ultra-hard particles shall be not less than 10 volume percent and not more than 30 volume percent. If the content of the ultra-hard particles is less than 10% by volume, the effect of improvement in the wear resistance of a wear resistance, cutting, or drilling tool is small. On the other hand, if the content exceeds 30 volume percent, the contacting portions between the ultra-hard particles in the composite material increase or the thickness of the hard material filling the spaces between the ultra-hard particles becomes small, so it becomes difficult to densify the composite material, the ultra-hard particles easily fall off, and wear resistance lowers.

On the other hand, a WC-based cemented carbide, TiCN-based cermet, and ceramic can be used for the hard material. The use of the WC-based cemented carbide and TiCN-based cermet are preferable since extremely excellent strength, toughness, and workability can be realized. The use of ceramic for the hard material provides excellent wear resistance and corrosion resistance and further reduces the weight. Particularly, if the matrix of ceramic (material accounting for 50 or more volume percent of the hard material) is a material comprising one or more kinds selected from the group consisting of alumina, TiC, ZrO₂, Si₃N₄, and SiC, superior wear resistance and corrosion resistance can be expected. Especially, since SiC and AIN are high in heat conductivity, excellent heat conductivity of diamond can be utilized.

Furthermore, the ultra-hard particles are dispersed in the hard material so that the Vickers hardness of the composite material is within a range of ±15% to that of the hard material. It is generally said that the hardness of a composite material containing hard particles increases and its wear resistance also increases as the content of the hard particles increases. However, the present inventors have researched and found that, in such ultra-hard particles-containing materials, wear resistance increases on the contrary by controlling the hardness to be within the abovementioned prescribed range. That is, exceeding the lower limit of the prescribed range results in insufficient density and insufficient strength, and exceeding the upper limit results in lowering of the strength, the ultra-hard particles easily fall off. In other words, a portion exceeding the upper limit is a portion at which dispersion of the ultra-hard particles is insufficient and the particles condense, so that the portion easily becomes an origin of fracture, and since the thickness of the hard material is small, the ultra-hard particles easily fall off. Fall-off of the ultra-hard particles is remarkable in the case where the material is used for a wear resistance, cutting, or drilling tool. A more preferable prescribed allowance of the Vickers hardness of the composite material is ±10% to that of the hard material.

It is difficult to measure the Vickers hardness of a hard material in an ultra-hard particles-containing composite material by using the composite material itself. Therefore, the Vickers hardness of the hard material in the invention can be defined by a method in which powder having the same composition as that of the hard material in the composite material is sintered under the same sintering conditions as with manufacturing of the composite material, and the hardness of the sintered body thus obtained is measured. Another method may also be employed, in which the microhardness is measured with a Knoop or dynamic hardness gauge in a plurality of regions that do not contain the ultra-hard particles in the composite material of the invention, and the hardness value is converted into the Vickers hardness, whereby the Vickers hardness of the composite material that does not contain ultra-hard particles can be obtained. In addition, it is necessary to measure the microhardness in a region that does not contain ultra-hard particles at a depth of 3 times or less of the depth of indentation.

The preferable particle size of the ultra-hard particles is 0.5 through 100 µm. If ultra-hard particles with a diameter larger than 100 µm are used, the strength lowers significantly. On the other hand, ultra-hard particles with a diameter smaller than 0.5 µm easily fall off, so the range between 0.5 and 100 µm is suitable.

It is preferable that a coating be applied on the ultra-hard particles of the composite material. This is because an effect can be obtained whereby the reaction between the ultra-hard particles and the matrix is prevented when sintering is performed at a high temperature, and deterioration of the ultra-hard particles is prevented. It is desirable that at least one kind selected among heat resistant metals, carbides, nitrides, oxides, borides and silicides is used for the coating material. More concretely, lr, Os, Pt, Re, Rh, Cr, Mo, W, SiC, TiC, TiN, Al₂O₃ and so on can be used.

This coating thickness is not more than 1 µm, preferably not more than 0.8 µm. This is because, if the coating thickness is more than 1 µm, separation of the coating occurs easily due to the differences in the heat expansion coefficient, heat conductivity, and Young's modulus between the ultra-hard particles and coating, the characteristics of the composite material become unstable, and when the material is used as a material for a wear resistance, cutting, or drilling tool, the coating easily fractures and wears, and this may cause the ultra-hard particles to fall off. As a method for forming the coating, the CVD method, PVD method, or plating can be used.

In the invention, this coating is not always essential; however, in a case where a composite material including diamond particles dispersed in the cemented carbide or cermet therein is manufactured, it is preferable that the coating be applied.

It is especially preferable that an SiC film with a thickness in the range of 5 through 150nm be formed as the coating on a diamond particle. This is because, SiC can be easily coated with excellent adhesion on each diamond particle due to the reaction between SiO vaporized in a vacuum and carbon (C) composing diamond, and if the coating film thickness is not more than 5nm, the SiC cannot be coated on all diamond particles, and the diamond is oxidized starting from the portion without coating, resulting in lowering of the wear resistance. If the coating film thickness is 150nm or more, due to the differences in the heat expansion coefficient between the SiC film and diamond particles, the SiC film separates easily, and diamond particles are oxidized starting from the separated portion, resulting in lowered wear resistance.

Furthermore, the composite material of the invention is composed to be extremely dense. The degree of density is preferably equal to a density ratio of 99% or more in terms of a theoretical density ratio. The Vickers hardness of the composite material of the invention is desirably 20GPa or less.

Next, upon setting the mixing amount of ultra-hard particles to 10% or more by volume and 30% or less by volume, when a composite material is manufactured by powder metallurgy by mixing the particles with powder for the hard material, special control is required in manufacturing in order to set the Vickers hardness of the composite material to be within a range of ±15% to that of the hard material. It is important that the ultra-hard particles are evenly dispersed in the hard material. If the dispersion of the ultra-hard particles is uneven, it is difficult to set the Vickers hardness to be in the prescribed range. Particularly, in the case where the hard material is a WC-based cemented carbide or cermet, due to a considerable difference in specific gravity between the same and the ultra-hard particles, it is difficult to evenly disperse the ultra-hard particles to be mixed. Therefore, a method such as ultrasonic mixing is preferably employed for mixing the ultra-hard particles and hard material. In the case where the ultra-hard mixing is employed, it is desirable that the mixing period of time be 30 minutes or more at a frequency of 20kHz and 600W. Furthermore, in the case where a ball mill is used for mixing, a planet ball mill is preferably used.

Furthermore, it is preferable that the lower layer of the ultra-hard particles-containing composite material include at least one layer composed of a hard material that has a heat expansion coefficient higher than that of the upper layer and does not contain the ultra-hard particles. This is because by providing, at the lower layer, a layer composed of a hard material that has a high heat expansion coefficient and does not contain the ultra-hard particles, compressive stress can be added to the upper layer and increases the impact resistance of the material.

To manufacture the composite material of the invention, electro-pressure sintering is preferably applied. When applying this sintering, it is preferable that the highest maintained temperature be 1800°C or lower, the pressure be 5 through 200MPa, and the sintering period of time be 30 minutes or less.

### Brief Description of the Drawings

Figure 1 is a 100-power microscopic photograph of a composite material obtained by the invention, wherein the Vickers hardness thereof has been measured; and
Figure 2 is a 1500-power microscopic photograph of a composite material obtained by the invention.

### Best Mode for Carrying Out the Invention

Hereinafter, embodiments of the invention are explained.

### (Example 1)

WC powder with an average particle size of 3 µm and Co powder with an average particle size of 1 µm were prepared, weighted so that the Co amount is 10% by weight, and crushed and mixed by using an attriter, whereby a WC-10-weight-percent Co powder was prepared.

Next, diamond powder with an average particle size of 10 µm on which W was coated by 0.2 µm by the PVD method was prepared, and the obtained powder was weighted so that the diamond is 30% by volume with respect to the WC-10-weight-percent Co powder. Furthermore, the projection energy and mixing period of time were changed by using an ultrasonic mixing machine in ethanol so that the diamond powder mixed condition changed, whereby mixed powders Nos. 1-1 through 1-5 were prepared. Herein, the vibrational energy and the mixing period of time were increased from No. 1-1 toward No. 1-5. For No. 1-3, the vibrational energy frequency was 20kHz and 600W, and the mixing period of time was 30 minutes.

The powders thus prepared were filled into graphite molds with a diameter of 30mm, and while applying a pressure of 20MPa in a vacuum of 1.33Pa (0.01 Torr) or less, a pulse current was supplied and electro-pressure sintering was applied. As a temperature rising pattern, the temperature was raised to 1330°C in 6 minutes, maintained at this temperature for 2 minutes, and then cooled at a rate of 40°C/min. The sintered bodies Nos. 1-1 through 1-5 thus obtained have a diameter of 30mm and a thickness of 5mm, which having no cracks are excellent in appearance. In addition, as a standard sample, sample No. 1-6 was also prepared by applying electro-pressure sintering to the abovementioned WC-10-weight-percemt Co powder in the abovementioned conditions.

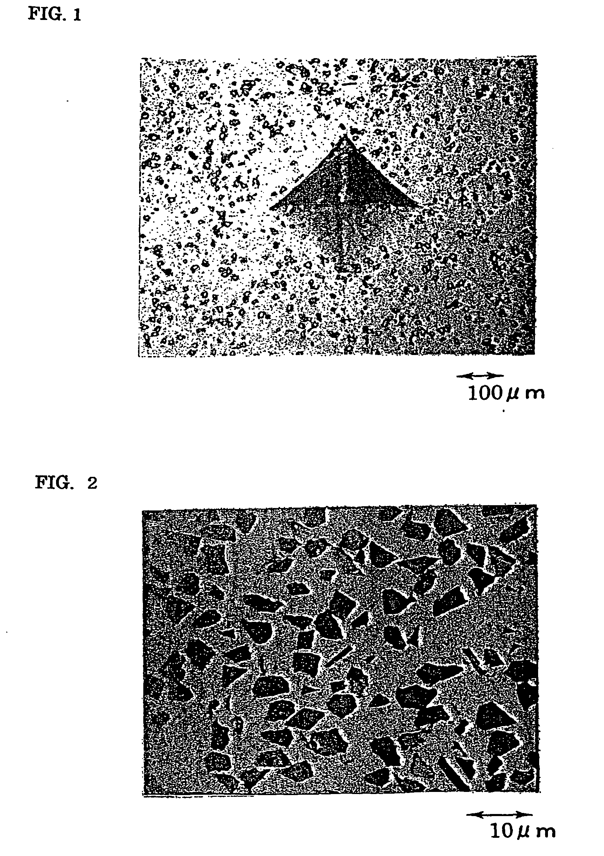

Black scales of the sintered body Nos. 1-1 through 1-5 were removed, and the specific gravities were measured by the Archimedes method. The densities with respect to the theoretical densities are shown in Table I. All sintered bodies have densities of 99% or more. The surfaces of these sintered bodies were then ground by a #200 diamond whetstone and mirror-finished by using #1500 or 3000 diamond paste, and hardness measurements were done for these by using a diamond-made Vickers indenter. Figure 1 shows a 100-power microscopic photograph showing the condition where the Vickers indenter is applied to sample No. 1-5. This shows the condition where small particles are satisfactorily dispersed. The results of the hardness measurements are shown in Table I. "Hardness deviation from the matrix hardness" in Table I is expressed by 100 x ("hardnesses of Nos. 1-1 through 1-5 sintered bodies," - "hardness of sintered body No.6") ö "hardness of sintered body No. 6".

Next, sintered bodies with a size of 3x4x11mm were cut from these sintered bodies, and a wear resistance test was conducted by pressing the 3x11mm surfaces of the cut sintered bodies by a pressure of 10MPa for 60 minutes against the columnar SUJ2 (equivalent to JIS G 4805 standard or ISO B1 or 100Cr6) test piece that was rotating at 20m/min on its axis. The amount of wear of the sintered bodies Nos. 1-1 through 1-5 is shown in Table I on the supposition that the amount of wear of the sintered body (No. 1-6) prepared as a standard sample is defined as 100. The results of the measurements of bending strength of these sintered bodies in a three-point bending test are also shown in Table I. As shown in Table I, the results have confirmed that sample Nos. 1-3 through 1-5 within a range of ±15% to the Vickers hardness of the sample No. 1-6 that does not contain diamond particles have excellent wear resistance and bending strength. The stronger the vibrational energy in ultrasonic mixing, and also, the longer the mixing period of time, the more even the mixture of the diamond particles and powder of the hard material, and this shows a satisfactory result.

**Table I**

| Sample number | Diamond content (% by volume) | Density (%) | Vickers hardness (GPa) | Hardness deviation from the matrix hardness (%) | Wear resistance | Bending strength (GPa) | Present invention |
|---|---|---|---|---|---|---|---|
| No.1-1 | 30 | 95.2 | 12.9 | -18.1 | 52 | 0.78 | |
| No.1-2 | 30 | 99.4 | 18.8 | 24.5 | 29 | 1.17 | |
| No.1-3 | 30 | 100 | 16.9 | 11.9 | 11 | 1.66 | ○ |
| No.1-4 | 30 | 100 | 16.2 | 7.3 | 6 | 1.85 | ○ |
| No.1-5 | 30 | 100 | 15.5 | 2.6 | 5 | 1.97 | ○ |
| No.1-6 | 0 | 100 | 15.1 | 0 | 100 | 2.68 | |

### (Example 2)

In this example, seven kinds of raw materials for the hard material were used and sintered in seven sintering conditions suitable for the raw materials. Furthermore, samples made from only the hard materials containing no ultra-hard particles were prepared, and samples obtained by mixing for 10 minutes and 30 minutes by using an ultrasonic mixing machine were prepared, and their characteristics were compared with each other. These are shown in Table IV by attaching "-0", "-1" and "-2" next to the alphanumeric samples in order. The samples obtained by mixing for 10 minutes are materials that are, due to a shortage of the mixture, not within the scope of the invention that requires the "hardness deviation from the matrix hardness" be within 15%, and these samples are comparative examples.

Powders having the compositions shown in Table II were prepared as raw materials for the hard material, and diamond particles with an average particle size of 25 µm were mixed in to these powders by using a ball mill and an ultrasonic mixing machine so that the contents of the diamond particles are 20% by volume. Next, the powders were sintered by an electro-pressure sintering apparatus using a pulse current at the rates of temperature rises, the highest maintained temperatures, maintained times, and cooling rates shown in Table III to manufacture sintered bodies with a diameter of 50mm and a thickness of 5mm. The Vickers hardnesses of these sintered bodies were measured in the same manner as in Example 1, and the results of the measurements are shown in Table IV. Furthermore, wear resistances of these samples were measured in the same manner as in Example 1, and the results of the measurements are also shown in Table IV.

**Table II**

| Unit: % by weight | | | | | | | | | | | | | |
|---|---|---|---|---|---|---|---|---|---|---|---|---|---|
| Powder name | TiCN | Al₂O₃ | TiC | Si₃N₄ | SiC | AlN | ZrO₂ | Y₂O₃ | MgO | B₄C | Mo₂C | Ni | Co |
| A | 82 | | | | | | | | | | 3 | 12 | 3 |
| B | | 97 | | | | | | 1 | 2 | | | | |
| C | | 67 | 30 | | | | | | 3 | | | | |
| D | | 2 | | 93 | | | | 5 | | | | | |
| E | | | | | 95 | | | | | 5 | | | |
| F | | | | | | 95 | | 5 | | | | | |
| G | | | | | | | 93 | 5 | 2 | | | | |

**Table**

| Powder name | Rate of temperature rise (°C/min) | Highest maintained temperature (°C) | Maintained time (min) | Cooling rate (°C/min) |
|---|---|---|---|---|
| A | 140 | 1400 | 1 | 20 |
| B | 200 | 1500 | 10 | 30 |
| C | 200 | 1650 | 10 | 30 |
| D | 250 | 1700 | 2 | 50 |
| E | 200 | 1800 | 10 | 30 |
| F | 150 | 1600 | 5 | 15 |
| G | 250 | 1500 | 5 | 10 |

**Table IV**

| Sample Number | Powder | Density (%) | Vickers hardness (GPa) | Hardness deviation from the matrix hardness (%) | Amount of wear | Present invention |
|---|---|---|---|---|---|---|
| A-0 | A | 100 | 19 | 0 | 100 | |
| A-1 | A | 100 | 24.5 | +25 | 32 | |
| A-2 | A | 100 | 20 | +5 | 7 | ○ |
| B-0 | B | 100 | 16.5 | 0 | 100 | |
| B-1 | B | 100 | 22 | +33 | 44 | |
| B-2 | B | 100 | 17 | +3 | 10 | ○ |
| C-0 | C | 100 | 18 | 0 | 100 | |
| C-1 | C | 98.6 | 22.5 | +25 | 21 | |
| C-2 | C | 99.5 | 18 | 0 | 4 | ○ |
| D-0 | D | 100 | 17 | 0 | 100 | |
| D-1 | D | 99.1 | 23 | +35 | 27 | |
| D-2 | D | 99.5 | 16.5 | -3 | 3 | ○ |
| E-0 | E | 98.5 | 20.5 | 0 | 100 | |
| E-1 | E | 97.9 | 24.5 | +20 | 21 | |
| E-2 | E | 99.0 | 19 | -10 | 3 | ○ |
| F-0 | F | 100 | 14 | 0 | 100 | |
| F-1 | F | 100 | 20.5 | +46 | 19 | |
| F-2 | F | 100 | 15 | +7 | 4 | ○ |
| G-0 | G | 100 | 16 | 0 | 100 | |
| G-1 | G | 99.6 | 21 | +31 | 36 | |
| G-2 | G | 100 | 17 | +6 | 9 | ○ |

As a result, it was proved that the wear resistances of the samples of the invention whose Vickers hardnesses are within the range of ±10% to that of the sample which does not contain diamond particles are superior to that of the samples whose Vickers hardnesses are not within the range of ±10% to that of the sample which does not contain diamond particles.

### (Example 3)

Diamond particles and cubic boron nitride particles with an average particle size of 6 µm were prepared, and TiN was coated on these powders by 0.1 µm by the PVD method. Furthermore, WC powder with an average particle size of 5 µm, TaC, Co, and Ni powders with an average particle size of 1 µm, and Cr and Mo powders with an average particle size of 2 µm were weighted so as to have the compositions shown in Table V, and mixed in ethanol while changing the ball mill conditions as described below, whereby powders that were different in the disperse conditions of the diamond and cubic boron nitride particles were prepared. That is, in Table VI, the ratio of the mixing periods of time for sample Nos. 3-1, 3-2, and 3-3 is 1:5:10. The ratios of the mixing periods of time for sample Nos. 3-4, 3-5, and 3-6, and 3-7, 3-8, and 3-9 are also 1:5:10. These powders were dried and sintered under the same sintering conditions as in Example 1 to manufacture sintered bodies, and their wear resistances were measured as in Example 1 as well as the Vickers hardnesses. The results of the measurements are shown in Table VI. Figure 2 shows a 1500-power microscopic photograph of the sample No. 3-3 showing the typical composition of the invention. In the figure, the condition is shown where cubic boron nitride particles that are ultra-hard particles are dispersed and floated in the hard material. In Fig. 2, while the formation of the hard material is unclear, it can be observed by a well-known method such as corroding the surface.

The hardnesses of the hard materials that are the matrixes are determined by using sintered bodies manufactured from only hard materials that have the compositions H, I, and J, respectively, and that do not contain diamond and cubic boron nitride by sintering under the same sintering conditions as in Example 1. Based on the measured values, "hardness deviation from the matrix hardness" is determined, and the amount of wear is shown by a value calculated on the supposition that the amount of wear of the sintered body manufactured from the hard material that does not contain diamond and cubic boron nitride is defined as 100. The results are also shown in Table VI.

Under the heading of "Hardness deviation from the matrix hardness" of Table VI, the hardnesses are positive or negative. This phenomenon is caused by insufficient dispersion of the ultra-hard particles. That is, under these conditions, sintering is insufficient at a portion at which only the ultra-hard particles condense in the sintered body, so that the hardness lowers at this portion. On the other hand, since sintering proceeds and the density of the ultra-hard particles increases at a portion containing the ultra-hard particles and a small amount of the hard material, the hardness increases at this portion. In the case where the mixture is insufficient and the ultra-hard particles are not sufficiently dispersed, the hardness becomes uneven for the abovementioned reasons.

**Table V**

| Unit: % by volume | | | | | | | | | |
|---|---|---|---|---|---|---|---|---|---|
| | Powder | Cubic boron nitride particles | Diamond particles | WC | Co | Ni | Cr | Mo | TaC |
| | H | 25 | 0 | 53 | 21 | 0 | 0 | 0 | 1 |
| | I | 10 | 10 | 67 | 10 | 1.5 | 0.5 | 0.5 | 0.5 |
| | J | 5 | 5 | 87 | 3 | 0 | 0 | 0 | 0 |

**Table VI**

| Sample number | Powder | Density (%) | Vickers Hardness (GPa) | Hardness deviation from the matrix hardness (%) | Amount of wear | Present invention |
|---|---|---|---|---|---|---|
| 3-1 | H | 100 | 17.8 | +27 | 37 | |
| 3-2 | H | 100 | 16.0 | +14 | 13 | ○ |
| 3-3 | H | 100 | 14.3 | +2 | 4 | ○ |
| 3-4 | I | 100 | 22.5 | +25 | 34 | |
| 3-5 | I | 100 | 14.9 | -17 | 42 | |
| 3-6 | I | 100 | 17.5 | -3 | 9 | ○ |
| 3-7 | J | 100 | 17.0 | -19 | 28 | |
| 3-8 | J | 99.1 | 18.7 | -11 | 11 | ○ |
| 3-9 | J | 99.5 | 19.7 | -6 | 7 | ○ |

From this Table VI, it was proved that the wear resistances of sample Nos. 3-2, 3-3, 3-6, 3-8, and 3-9 whose Vickers hardnesses are in the range of ±15% to that of the sample for which diamond particles are not added are superior to the wear resistances of sample Nos. 3-1, 3-4, 3-5, and 3-7 whose Vickers hardnesses are not in the range of ±15% to that of the sample for which diamond particles are not added. Particularly, the wear resistances of sample Nos. 3-3, 3-6, and 3-9 whose allowance mentioned above is within ±10% are superior.

### (Example 4)

WC powder with an average particle size of 3 µm, Co and Ni powder with an average particle size of 1 µm, and Cr powder with an average particle size of 2 µm were prepared, and wet-crushed and mixed by using the attriter, whereby powders shown in Table VII were prepared.

**Table VII**

| Sample number | WC (% by weight) | Co (% by weight) | Ni (% by weight) | Cr (% by weight) |
|---|---|---|---|---|
| K | 90 | 10 | 0 | 0 |
| L | 94 | 5 | 1 | 0 |
| M | 80 | 18 | 1 | 1 |

Next, various diamond powders which were coated with SiC by the CVD method and were different in particle size and SiC thickness were prepared, and weighted so that the diamond was 30% by volume of sample K, and were mixed with sample K in ethanol at a vibrational energy frequency of 20kHz and 600W for 30 minutes by using an ultrasonic mixing machine, whereby powders (O-S) shown in Table VIII were prepared.

**Table VIII**

| Sample number | Diamond particle size (µm) | Diamond content (% by volume) | SiC film thickness (nm) | Hard material powder |
|---|---|---|---|---|
| O | 0.1 | 30 | 10 | K |
| P | 50 | 30 | 1 | K |
| Q | 50 | 30 | 50 | K |
| R | 50 | 30 | 200 | K |
| S | 150 | 30 | 10 | K |

These powders were dried, and then, the powders shown in Table VII were laminated in the form of layers so that the layers were equal in thickness to each other as shown in Table IX, whereby sintered bodies were manufactured under the same sintering conditions as in Example 1.

**Table IX**

| Sample number | First layer | Second layer | Third layer |
|---|---|---|---|
| 4-0 | K | --- | --- |
| 4-1 | O | --- | --- |
| 4-2 | P | --- | --- |
| 4-3 | Q | --- | --- |
| 4-4 | R | --- | --- |
| 4-5 | S | --- | --- |
| 4-6 | Q | K | --- |
| 4-7 | Q | L | --- |
| 4-8 | Q | K | M |

Vickers hardnesses and wear resistances of the obtained sintered bodies were measured in the same manner as in Example 1. Then, a solid cemented carbide ball was repeatedly struck on the first layers of the obtained sintered bodies at an impact energy of 30J, and the number of times of the strikes for breaking the sintered bodies was investigated. The results of the investigation are shown in Table X.

**Table X**

| Sample number | Density (%) | Vickers hardness (GPa) | Hardness deviation from the matrix hardness (%) | Amount of wear | Number of striking times for breaking | Present invention |
|---|---|---|---|---|---|---|
| 4-0 | 100 | 15.1 | 0 | 100 | 23 | |
| 4-1 | 100 | 11.1 | -26.5 | 31 | 10 | |
| 4-2 | 80 | 12.2 | -19.2 | 28 | 8 | |
| 4-3 | 100 | 15.5 | 2.6 | 5 | 15 | ○ |
| 4-4 | 78 | 11.8 | -21.9 | 29 | 7 | |
| 4-5 | 100 | 18.8 | 24.5 | 3 | 3 | |
| 4-6 | 100 | 15.4 | 2 | 4 | 31 | ○ |
| 4-7 | 100 | 15.5 | 2.6 | 5 | 11 | ○ |
| 4-8 | 100 | 15.5 | 2.6 | 5 | 45 | ○ |

From the results shown in Table X, it can be understood that the sample No. 4-3 of the invention has excellent wear resistance since the SiC film is evenly coated. Particularly, sample Nos. 4-6 and 4-8 are extremely excellent in wear resistance in comparison with other materials since a material with a great heat expansion coefficient is disposed at the lower layer and a compressive stress is applied to the upper layer in the sample Nos. 4-6 and 4-8.

In addition, needless to say, the ultra-hard particles-containing composite material of the invention is not limited to the above concrete examples, but can be variously modified without departing from the spirit of the invention.

### Industrial Applicability

As described above, according to the invention, an ultra-hard particles-containing composite material with excellent wear resistance can be obtained without using an extreme pressure container. Particularly, an ultra-hard particles-containing composite material can be obtained with excellent wear resistance in which fall-off of the ultra-hard particles are suppressed.

Therefore, it is expected that the material can be used as a wear resistant material for bearings, nozzles, wire drawing dies, and centerless blades of machine tools, steel-frame working tools, and the like, cutting tools such as tips for woodwork, metal machining, and resin machining, guide pads and the like, or drilling tools such as casing bits, shield cutter bits and the like.

## Claims

1. An ultra-hard particles-containing composite material comprising ultra-hard particles and a hard material, wherein the ultra-hard particles are diamond and / or cubic boron nitride, the content of the ultra-hard particles in the composite material is not less than 10 volume percent and not more than 30 volume percent, the ultra-hard particles are dispersed in the composite material such that the Vickers hardness of the composite material is within a range of +/-15% to that of the hard material, wherein the Vickers hardness is measured by (i) a method in which powder having the same composition as that of the hard material in the composite material is sintered under the same sintering conditions as the composite material, and the hardness of the sintered body thus obtained is measured, or (ii) the microhardness is measured with a Knoop or dynamic hardness gauge in a plurality of regions that do not contain the ultra-hard particles in the composite material, and the hardness value is converted into the Vickers hardness, whereby the Vickers hardness of the composite material that does not contain ultra-hard particles is obtained, wherein the microhardness is measured in a region that does not contain ultra-hard particles at a depth of 3 times or less of the depth of indentation.

2. An ultra-hard particles-containing composite material according to Claim 1, wherein the particle size of the ultra-hard particles is in the range of 0.5 to 100 µm.

3. An ultra-hard particles-containing composite material according to Claim 1, wherein the ultra-hard particles are coated with a film formed of at least one kind selected from the group consisting of a heat resistant metal, carbon, nitride, oxide, boride, and silicide, and the thickness of the film is 1 µm or less.

4. An ultra-hard particles-containing composite material according to Claim 3, wherein the thickness of the coating is 0.8 µm or less.

5. An ultra-hard particles-containing composite material according to Claim 3, wherein the coating is an SiC film with a thickness of 5 through 150 nm.

6. An ultra-hard particles-containing composite material according to Claim 5, wherein the ultra-hard particles are diamond particles.

7. An ultra-hard particles-containing composite material according to Claim 1, wherein the prescribed allowance of the Vickers hardness of the composite material with respect to the Vickers hardness of the hard material is +/-10%.

8. An ultra-hard particles-containing composite material according to Claim 1, wherein the composite material has a density of 99% or more in terms of a theoretical density ratio.

9. An ultra-hard particles-containing composite material according to Claim 1, wherein the hard material is a WC-based cemented carbide.

10. An ultra-hard particles-containing composite material according to Claim 1, wherein the hard material is cermet.

11. An ultra-hard particles-containing composite material according to Claim 1, wherein the hard material is ceramic.

12. An ultra-hard particles-containing composite material according to Claim 11, wherein the matrix composing the ceramic is at least one kind selected from the group consisting of Al₂O₃, TiC, ZrO₂, Si₃N₄, and AlN.

13. An ultra-hard particles-containing composite material according to Claim 1, wherein at least one layer formed from a hard material that does not contain ultra-hard particles is provided at the lower layer of the ultra-hard particles-containing composite material.

14. An ultra-hard particles-containing composite material according to Claim 13, wherein the layer formed from a hard material that does not contain the ultra-hard particles has a heat expansion coefficient higher than that of the upper layer.

15. An ultra-hard particles-containing composite material according to any of Claims 1 through 14, wherein the Vickers hardness of the composite material is 20GPa or less.

## Patentansprüche

1. Kompositmaterial mit ultraharten Partikeln, umfassend ultraharte Partikel und ein hartes Material, wobei die ultraharten Partikel Diamant und/oder kubisches Bornitrid sind, der Anteil der ultraharten Partikel in dem Kompositmaterial nicht weniger als 10 Vol.-% und nicht mehr als 30 Vol.-% beträgt, die ultraharten Partikel in dem Kompositmaterial dispergiert sind, so dass die Vickers-Härte des Kompositmaterials in einem Bereich von +/- 15% der Vickers-Härte des harten Materials liegt, wobei die Vickers-Härte messbar ist durch (i) ein Verfahren, bei welchem ein Pulver mit der gleichen Zusammensetzung wie der des harten Materials in dem Kompositmaterial unter den gleichen Sinterbedingungen wie das Kompositmaterial gesintert wird, und die Härte des so erhaltenen gesinterten Körpers gemessen wird, oder (ii) die Mikrohärte mit einem Knoop- oder dynamischen Härtemesser in einer Vielzahl von Bereichen gemessen wird, welche die ultraharten Partikel in dem Kompositmaterial nicht enthalten, und der Härtewert in die Vickers-Härte umgewandelt wird, wodurch die Vickers-Härte des Kompositmaterials, welches keine ultraharten Partikel enthält, erhalten wird, wobei die Mikrohärte in einem Bereich, welcher keine ultraharten Partikel enthält, mit einer Tiefe von dreimal oder weniger der Tiefe des Eindrucks gemessen wird.

2. Kompositmaterial mit ultraharten Partikeln nach Anspruch 1, wobei die Partikelgröße der ultraharten Partikel in dem Bereich von 0,5 bis 100 µm liegt.

3. Kompositmaterial mit ultraharten Partikeln nach Anspruch 1, wobei die ultraharten Partikel mit einem Film beschichtet sind, gebildet aus wenigstens einer Art gewählt aus der Gruppe bestehend aus einem wärmebeständigen Metall, Kohlenstoff, Nitrid, Oxid, Borid und Silicid, und wobei die Dicke des Films 1 µm oder weniger beträgt.

4. Kompositmaterial mit ultraharten Partikeln nach Anspruch 3, wobei die Dicke der Beschichtung 0,8 µm oder weniger beträgt.

5. Kompositmaterial mit ultraharten Partikeln nach Anspruch 3, wobei die Beschichtung ein SiC-Film mit einer Dicke von 5 bis 150 nm ist.

6. Kompositmaterial mit ultraharten Partikeln nach Anspruch 5, wobei die ultraharten Partikel Diamantpartikel sind.

7. Kompositmaterial mit ultraharten Partikeln nach Anspruch 1, wobei die vorbeschriebene Abweichung der Vickers-Härte des Kompositmaterials in Bezug auf die Vickers-Härte des harten Materials +/- 10% beträgt.

8. Kompositmaterial mit ultraharten Partikeln nach Anspruch 1, wobei das Kompositmaterial eine Dichte von 99% oder mehr in Bezug auf ein theoretisches Dichteverhältnis aufweist.

9. Kompositmaterial mit ultraharten Partikeln nach Anspruch 1, wobei das harte Material ein auf Wolframkarbid basierendes Hartmetall ist.

10. Kompositmaterial mit ultraharten Partikeln nach Anspruch 1, wobei das harte Material ein Cermet ist.

11. Kompositmaterial mit ultraharten Partikeln nach Anspruch 1, wobei das harte Material eine Keramik ist.

12. Kompositmaterial mit ultraharten Partikeln nach Anspruch 11, wobei die Matrix, welche die Keramik bildet, wenigstens einer Art ist, gewählt aus der Gruppe bestehend aus Al₂O₃, TiC, ZrO₂, Si₃N₄ und AIN.

13. Kompositmaterial mit ultraharten Partikeln nach Anspruch 1, wobei wenigstens eine Schicht, welche aus einem harten Material, das keine ultraharten Partikel enthält, gebildet ist, an der unteren Schicht des Kompositmaterials mit ultraharten Partikeln bereitgestellt ist.

14. Kompositmaterial mit ultraharten Partikeln nach Anspruch 13, wobei die aus einem harten Material gebildete Schicht, welche keine ultraharten Partikel enthält, einen höheren Wärmeausdehnungskoeffizienten als die obere Schicht aufweist.

15. Kompositmaterial mit ultraharten Partikeln nach einem der Ansprüche 1 bis 14, wobei die Vickers-Härte des Kompositmaterials 20 GPa oder weniger beträgt.

## Revendications

1. Matériau composite contenant des particules ultra-dures comprenant des particules ultra-dures et un matériau dur, où les particules ultra-dures sont du diamant et/ou du nitrure de bore cubique, la teneur des particules ultra-dures dans le matériau composite n'est pas inférieure à 10 % en volume et pas supérieure à 30 % en volume, les particules ultra-dures sont dispersées dans le matériau composite de sorte que la dureté Vickers du matériau composite est dans une plage de +/-15 % de celle du matériau dur, où la dureté Vickers est mesurée par (i) un procédé dans lequel une poudre ayant la même composition que celle du matériau dur dans le matériau composite est frittée dans les mêmes conditions de frittage que le matériau composite, et la dureté du corps fritté ainsi obtenu est mesurée, ou (ii) la micro-dureté est mesurée avec une jauge de dureté Knoop ou dynamique dans une pluralité de régions qui ne contiennent pas les particules ultra-dures dans le matériau composite, et la valeur de dureté est convertie en la dureté Vickers, de sorte que la dureté Vickers du matériau composite qui ne contient pas de particules ultra-dures est obtenue, où la micro-dureté est mesurée dans une région qui ne contient pas de particules ultra-dures à une profondeur de trois fois ou moins la profondeur d'indentation.

2. Matériau composite contenant les particules ultra-dures selon la revendication 1 où la taille de particules des particules ultra-dures est dans la plage de 0,5 à 100 µm.

3. Matériau composite contenant des particules ultra-dures selon la revendication 1 où les particules ultra-dures sont revêtues d'un film formé d'au moins un type choisi dans le groupe consistant en un métal résistant à la chaleur, le carbone, un nitrure, un oxyde, un borure et un siliciure, et l'épaisseur du film est 1 µm ou moins.

4. Matériau composite contenant des particules ultra-dures selon la revendication 3 où l'épaisseur du revêtement est 0,8 µm ou moins.

5. Matériau composite contenant des particules ultra-dures selon la revendication 3 où le revêtement est un film de SiC d'une épaisseur de 5 à 150 nm.

6. Matériau composite contenant des particules ultra-dures selon la revendication 5 où les particules ultra-dures sont des particules de diamant.

7. Matériau composite contenant des particules ultra-dures selon la revendication 1 où la tolérance prescrite de la dureté Vickers du matériau composite par rapport à la dureté Vickers du matériau dur est +/- 10 %.

8. Matériau composite contenant des particules ultra-dures selon la revendication 1 où le matériau composite a une densité de 99 % ou plus en termes d'un rapport de densités théoriques.

9. Matériau composite contenant des particules ultra-dures selon la revendication 1 où le matériau dur est un carbure cémenté à base de WC.

10. Matériau composite contenant des particules ultra-dures selon la revendication 1 où le matériau dur est un cermet.

11. Matériau composite contenant des particules ultra-dures selon la revendication 1 où le matériau dur est une céramique.

12. Matériau composite contenant des particules ultra-dures selon la revendication 11 où la matrice composant la céramique est au moins un type choisi dans le groupe consistant en Al₂O₃, TiC, ZrO₂, Si₃N₄ et AIN.

13. Matériau composite contenant des particules ultra-dures selon la revendication 1 où au moins une couche formée à partir d'un matériau dur qui ne contient pas de particules ultra-dures est prévue au niveau de la couche inférieure du matériau composite contenant des particules ultra-dures.

14. Matériau composite contenant des particules ultra-dures selon la revendication 13 où la couche formée à partir d'un matériau dur qui ne contient pas les particules ultra-dures a un coefficient de dilatation thermique supérieur à celui de la couche supérieure.

15. Matériau composite contenant des particules ultra-dures selon l'une quelconque des revendications 1 à 14 où la dureté Vickers du matériau composite est 20 GPa ou moins.
